(19) **Europäisches Patentamt / European Patent Office / Office européen des brevets**

(11) **EP 1 445 372 B1**

(12) **EUROPEAN PATENT SPECIFICATION**

(45) Date of publication and mention
of the grant of the patent:
**02.05.2007 Bulletin 2007/18**

(51) Int Cl.:
***D06N 3/00*** *(2006.01)*

(21) Application number: **04002800.3**

(22) Date of filing: **09.02.2004**

(54) **Suede-finished leather-like sheet and production method thereof**

Wildlederartiges Kunstleder und Verfahren zu dessen Herstellung

Suede synthétique et procédé de préparation

(84) Designated Contracting States:
**DE FR GB IT**

(30) Priority: **07.02.2003 JP 2003030374**

(43) Date of publication of application:
**11.08.2004 Bulletin 2004/33**

(73) Proprietor: **KURARAY CO., LTD.**
**Kurashiki-shi,**
**Okayama (JP)**

(72) Inventors:
• **Yamaguchi, Fumihiro**
**Okayama-shi**
**Okayama (JP)**

• **Yoneda, Hisao**
**Okayama-shi**
**Okayama (JP)**

(74) Representative: **Vossius & Partner**
**Siebertstrasse 4**
**81675 München (DE)**

(56) References cited:
| | |
|---|---|
| **EP-A- 0 651 090** | **EP-A- 1 036 876** |
| **EP-A- 1 067 234** | **EP-A- 1 209 280** |
| **US-A- 4 233 349** | **US-A- 4 604 320** |

EP 1 445 372 B1

**Description**

The present invention relates to a soft, moderately stretchable leather-like sheet having an excellent shape stability, which is suitable for clothing applications, especially for glove applications.

Hitherto, there have been proposed suede-finished leather-like sheets which are produced by napping the surface of a sheet-like material comprising a nonwoven fabric made of polyester or polyamide microfine fiber and a polymeric elastomer impregnated and solidified therein (for example, Japanese Patent Application Laid-Open No. 11-222780, page 2, column 2, line 41 through page 3, column 3, line 16). However, the proposed suede-finished leather-like sheets tend to be wholly hard in their touch and feel, and the clothing made thereof is inferior to natural leathers in wearing comfort. The inventors have proposed a highly stretchable nonwoven fabric made of an elastic fiber and a non-elastic fiber (Japanese Patent Publication No. 1-41742, page 2, column 4, lines 6-28). However, because of the absence of a polymeric elastomer, the proposed nonwoven fabric is somewhat insufficient in the shape stability during passing through the production steps and the napping ability. The clothing made thereof is also insufficient in the shape stability and fitting feel. The inventors have further proposed a soft, moderately stretchable suede-finished leather-like sheet preferably having a 20% modulus of 0.1 to 0.3 kg/mm$^2$ in the machine direction and 0.001 to 0.03 kg/mm$^2$ in the transverse direction (Japanese Patent Publication No. 8-6260, page 2, column 3, lines 20-33). Although the proposed suede-finished leather-like sheet shows a soft feel and a good stretchability comparable to those of natural leathers, the clothing made thereof is likely to lose its shape during a long-term wearing and is not sufficient in the tear strength. Thus, the proposed suede-finished leather-like sheet is not satisfactory for use in clothing applications.

Because of recent increasing degree of requirement in the sense such as feel and touch of dress, fashion or sports gloves, etc. made of a suede-finished leather-like sheet, there is a strong demand for dress, fashion or sports gloves, etc. which are soft and stretchable to such an extent not attained before and have an excellent shape stability enough to prevent the loss of their shape due to a long-term wearing. In view of these circumstances, an object of the present invention is to provide a suede-finished leather-like sheet having both a soft feel comparable to that of natural leathers and sufficient mechanical properties, particularly a high shape stability and tear strength simultaneously.

In general, a suede-finished leather-like sheet comprising a fiber-entangled nonwoven fabric made of microfine fiber and a polymeric elastomer impregnated thereinto tends to become softer in its feel with increasing elongation and decreasing tenacity of microfine fiber, but tends to be deteriorated in the tear strength and shape stability to reduce its commercial value. As a result of extensive study in view of developing a suede-finished leather-like sheet having both a soft feel comparable to that of natural leathers and sufficient mechanical properties, particularly a high shape stability and tear strength simultaneously, according to the present invention it has been found that the intended leather-like sheet is obtained by making two kinds of fiber materials having different physical properties into an integral composite body. More specifically, it has been found according to the present invention that the above object is achieved by a composite web comprising a surface layer made of a microfine fiber generated from a microfine fiber-forming fiber having a high elongation and a low tenacity on a lower layer made of a microfine fiber generated from a microfine fiber-forming fiber having a low elongation and a high tenacity.

Thus, the present invention provides a suede-finished leather-like sheet which comprises a fiber-entangled nonwoven fabric comprising a layer (I) made of microfine fibers (A) having an average fineness of 0.5 dtex or less and a layer (II) made of microfine fibers (B) having an average fineness equal to or less than that of the microfine fibers (A), and a polymeric elastomer impregnated in the fiber-entangled nonwoven fabric,
the layers (I) and (II) being superposed one on the other and entangled into an integral composite such that a ratio of the microfine fiber (A) to the microfine fiber (B) is 10/90 to 90/10 by mass;
the surface of the layer (I) being a napped surface made mainly of raised microfine fibers (A);
the microfine fibers (A) being formed by converting microfine fiber-forming fibers (a) into microfine fibers, said microfine fiber-forming fibers

(a) satisfying the formulae (1) and (2):

$$130 < \mathrm{Sa} < 200 \qquad (1)$$

$$\mathrm{Fa} < 0.8 \qquad (2)$$

wherein Sa is an average elongation at break (%) and Fa is an average tenacity (cN/dtex) of the microfine fiber-forming fibers (a); and
the microfine fibers (B) being formed by converting microfine fiber-forming fibers (b) into microfine fibers, said microfine fiber-forming fibers

(b) satisfying the formulae (3) and (4):

$$30 < Sb < 90 \qquad (3)$$

$$1.5 < Fb \qquad (4)$$

wherein Sb is an average elongation at break (%) and Fb is an average tenacity (cN/dtex) of the microfine fiber-forming fibers (b).

The present invention further provides a suede-finished leather-like sheet which comprises a fiber-entangled nonwoven fabric comprising a layer (I) made of microfine fibers (A) having an average fineness of 0.5 dtex or less and a layer (II) made of microfine fibers (B) having an average fineness equal to or less than that of the microfine fibers (A), and a polymeric elastomer impregnated in the fiber-entangled nonwoven fabric,
the layers (I) and (II) being superposed one on the other and entangled into an integral composite such that a ratio of the microfine fiber (A) to the microfine fiber (B) is 10/90 to 90/10 by mass;
the surface of the layer (I) being a napped surface made mainly of raised microfine fibers (A);
the microfine fibers (A) satisfying the formulae (5) and (6):

$$130 < SA < 200 \qquad (5)$$

$$FA < 1.5 \qquad (6)$$

wherein SA is an average elongation at break (%) and FA is an average tenacity (cN/dtex) of the microfine fibers (A); and the microfine fibers (B) satisfying the formulae (7) and (8):

$$30 < SB < 90 \qquad (7)$$

$$2.0 < FB \qquad (8)$$

wherein SB is an average elongation at break (%) and FB is an average tenacity (cN/dtex) of the microfine fibers (B).
The present invention still further provides a process for producing a suede-finished leather-like sheet, comprising the steps of:

(i) producing a web (I) made of staple of microfine fiber-forming fibers (a) satisfying the formulae (1) and (2):

$$130 < Sa < 200 \qquad (1)$$

$$Fa < 0.8 \qquad (2)$$

wherein Sa is an average elongation at break (%) and Fa is an average tenacity (cN/dtex) of the microfine fiber-forming fibers (a);

(ii) producing a web (II) made of staple of microfine fiber-forming fibers (b) satisfying the formulae (3) and (4):

$$30 < Sb < 90 \qquad (3)$$

$$1.5 < Fb \qquad (4)$$

wherein Sb is an average elongation at break (%) and Fb is an average tenacity (cN/dtex) of the microfine fiber-forming fibers (b);

(iii) entangling the webs (I) and (II) to form a fiber-entangled nonwoven fabric;

(iv) impregnating a solution or dispersion of a polymeric elastomer into the fiber-entangled nonwoven fabric and solidifying the impregnated polymeric elastomer;

(v) forming a leather-like sheet substrate by converting the microfine fiber-forming fibers (a) into microfine fibers (A) having an average fineness of 0.5 dtex or less, and converting the microfine fiber-forming fibers (b) into microfine fibers (B) having an average fineness equal to or less than that of the microfine fibers (A);

(vi) napping a surface of the web (I) of the leather-like sheet substrate to form raised fibers made mainly of the microfine fibers (A) on the surface; and

(vii) dyeing the napped leather-like sheet substrate to form the suede-finished leather-like sheet.

The present invention still further provides a glove at least a part of which is made of the above suede-finished leather-like sheet.

The suede-finished leather-like sheet produced by the method of the present invention has a high-quality appearance such as a soft feel and touch comparable to those of natural leathers and a fine writing effect, and are softer and more stretchable than attained before and excellent in mechanical properties such as the shape stability enough to avoid the loss of appearance and shape even after a long-term wearing and the tear strength.

The present invention will be described in detail below.

The suede-finished leather-like sheet of the present invention comprises a nonwoven fabric produced by integrally entangling a microfine fiber (A) having an average fineness of 0.5 dtex or less with a microfine fiber (B) having an average fineness equal to or less than that of the microfine fiber (A), and a polymeric elastomer impregnated and solidified in the nonwoven fabric.

The average fineness of the microfine fiber (A) is required to be 0.5 dtex or less and preferably 0.001 to 0.5 dtex. If exceeding 0.5 dtex, the napped surface tends to have a rough feel and fail to show a fine gloss, thereby reducing the commercial value of the leather-like sheet. If the average fineness is 0.001 dtex or more, a good color development is obtained by dyeing to make it possible to dye the suede-finished leather-like sheet in a broad range of colors. The average fineness of the microfine fiber (B) is required to be equal to or less than that of the microfine fiber (A), preferably 0.001 to 0.3 dtex. If exceeding the average fineness of the microfine fiber (A), the microfine fiber (B) may penetrate into the layer of microfine fiber (A) to reach near the surface thereof during the entangling operation, thereby reducing the quality of the appearance of the suede-finished leather-like sheet. If the average fineness of the microfine fiber (B) is 0.001 dtex or more, the physical properties of the suede-finished leather-like sheet are preferably enhanced. An excessively large difference between the average finenesses of the microfine fiber (A) and the microfine fiber (B) may cause nonuniform dyeing of the final suede-finished leather-like sheet. Therefore, it is preferred for the average finenesses to satisfy the following formula (9):

$$0.1 \times A < B < A \qquad (9)$$

wherein A is the average fineness of the microfine fiber (A) and B is the average fineness of the microfine fiber (B). The average fineness referred to herein is calculated from an average diameter of microfine fibers measured on an electron microphotograph taken after converting the microfine fiber-forming fiber into microfine fiber and the density of polymer constituting the microfine fiber.

The microfine fiber-forming fiber (a) capable of forming the microfine fiber (A) and the microfine fiber-forming fiber (b) capable of forming the microfine fiber (B) are each produced by composite-spinning or mix-spinning two or more kinds of thermoplastic polymers which are not compatible to each other. By removing the sea component from a composite fiber which is represented by a so-called sea/island fiber, the microfine fibers composed of the remaining island component are formed.

The island component of the microfine fiber-forming fiber (a) and the microfine fiber-forming fiber (b) is preferably composed of a melt-spinnable polymer exhibiting sufficient fiber properties such as tenacity. Examples thereof include polyamides such as 6-nylon and 6,6-nylon, copolymers mainly based on polyamide, aromatic or aliphatic polyesters such as polyethylene terephthalate, polypropylene terephthalate and polybutylene terephthalate, copolymers mainly based on polyester, and acrylic polymers such as acrylonitrile-based copolymers, with polyamides and aromatic polyesters being preferred because of their ability to create natural leather-like appearance and feel and make mechanical properties and dyeability excellent.

The sea component of the microfine fiber-forming fiber (a) and the microfine fiber-forming fiber (b) is preferably made of a polymer having the following properties: a melt viscosity lower than that of the island component under spinning conditions, dissolving and decomposing behaviors different from those of the island component, a high solubility in a solvent or decomposer for removing the sea component, and a low compatibility with the island component. Examples thereof include polyethylenes, modified polyethylenes, polypropylenes, polystyrenes, modified polyesters, modified vinyl alcohol-based copolymers.

The island component may contain, if necessary, a pigment such as carbon black and titanium oxide unless the stability is adversely affected during the spinning operation. The pigment may be added to the island component of the microfine fiber (A) depending upon the intended color of the leather-like sheet in an amount of preferably 15 parts by mass or less, more preferably 10 parts by mass or less per 100 parts by mass of the resin constituting the microfine fiber (A). If added in amounts exceeding 15 parts by mass per 100 parts by mass of the microfine fiber (A), the microfine fiber (A) may become brittle to reduce the surface strength of the resultant leather-like sheet. The microfine fiber (B) may contain the pigment in an amount of preferably 10 parts by mass or less, more preferably 7 parts by mass or less per 100 parts by mass of the resin constituting the microfine fiber (B). If contains in amounts exceeding 10 parts by mass per 100 parts by mass of the microfine fiber (B), the mechanical properties such as tear strength of the leather-like sheet tends to be reduced.

In each of the microfine fiber-forming fibers (a) and (b), the area ratio of the sea component to the island component is preferably 30:70 to 70:30 when measured cross-sectionally. If the area percentage of the sea component is 30% or more, the amount of the sea component to be removed by dissolution or decomposition is sufficient to allow the resultant sheet to have a good softness. The area percentage of the sea component is preferably 70% or less, because the microfine fibers formed by removing the sea component by dissolution or decomposition are made of a sufficient amount of the island component to ensure satisfactory physical properties of the resultant leather-like sheet, and because the component to be removed by dissolution or decomposition is reduced to enhance the productivity.

The mix-spun or composite-spun sea/island fibers are then subjected to conventionally known processes such as drawing, crimping and cutting to obtain staples, i.e., the microfine fiber-forming fibers (a) and (b) used in the present invention. However, in the production of the microfine fiber-forming fiber (a), the drawing process may be omitted to impart the elongation at break and the tenacity of specific ranges described below.

The staples of the microfine fiber-forming fibers (a) and (b) may be treated with a lubricant containing, for example, silicone, etc. Known lubricants are usable, and examples thereof include polyorganosiloxanes and various modified silicone-based lubricants having an effect of reducing a friction between fibers, mineral oil-based lubricants having an effect of bringing the microfine fiber-forming fibers together and reducing the friction against metals, and antistatic agents. These lubricants are preferably used as a blend while taking the properties of the microfine fiber-forming fibers into consideration. The lubricating treatment may be performed either before or after crimping each microfine fiber-forming fiber, or may be performed in two or more steps using the same lubricant or different lubricants. The microfine fiber-forming fiber (a) and the microfine fiber-forming fiber (b) may be treated with different lubricants. Since each microfine fiber-forming fiber is made of two or more components, troubles such as coiling and splitting are generally likely to occur in the carding step or needle-punching step. Therefore, it is preferred to treat the microfine fiber-forming fiber at least with the lubricant having an effect of reducing the friction coefficient.

As described above, the feel of the leather-like sheet tends to become softer with increasing elongation at break and decreasing tenacity of the constituting fiber. However, the use of only a fiber having a high elongation at break and a low tenacity results in the reduction of mechanical properties. In the present invention, this problem is avoided by using two kinds of microfine fiber-forming fibers having different mechanical properties, namely, the microfine fiber-forming fibers (a) satisfying the formulae (1) and (2):

$$130 < Sa < 200 \qquad (1)$$

$$Fa < 0.8 \qquad (2)$$

wherein Sa is an average elongation at break (%) and Fa is an average tenacity (cN/dtex) of the microfine fiber-forming fiber (a), and
the microfine fiber-forming fiber (b) satisfying the formulae (3) and (4):

$$30 < Sb < 90 \qquad (3)$$

$$1.5 < Fb \qquad (4)$$

wherein Sb is an average elongation at break (%) and Fb is an average tenacity (cN/dtex) of the microfine fiber-forming fiber (b). With such a combination of two kinds of microfine fiber-forming fibers satisfying the formulae (1) to (4), the microfine fibers formed therefrom come to show an excellent effect on the appearance, feel, shape stability and tear strength of the leather-like sheet.

If Sa is 130% or less, the resultant leather-like sheet has a hard feel. If Sa is 200% or more, the clothing made of the resultant leather-like sheet may have a tendency to easily pill during its wear because of a large residual elongation. If Sb is 30% or less, the resultant leather-like sheet has a hard feel. If Sb is 90% or more, the reduction of mechanical properties such as tear strength cannot be avoided. The average elongation at break is preferably 140 to 180% for the microfine fiber-forming fiber (a) and 40 to 60% for the microfine fiber-forming fiber (b), because the wearing comfort and appearance are excellent.

If Fa is 0.8 cN/dtex or more, the resultant leather-like sheet has a hard feel. If Fb is 1.5 cN/dtex or less, the reduction of mechanical properties such as tear strength cannot be avoided. Fa is preferably 0.7 cN/dtex or less, because the physical properties of gloves, etc. during use are excellent. The lower limit of Fa is, but not particularly restricted, preferably 0.1 cN/dtex or more in consideration of the spinnability and basic properties of fiber. Fb is preferably 1.6 cN/dtex or more. The upper limit of Fb is, but not particularly restricted, preferably 5 cN/dtex or less in consideration of the feel and stability in the drawing step.

The microfine fiber-forming fibers (a) and (b) satisfying the formulae (1) to (4) may be produced by suitably controlling the conditions of known spinning or drawing operation. In the production of the microfine fiber-forming fibers (a), although depending upon the constituting components, the average elongation at break (Sa) approaches the lower limit of the formula (1) and the average tenacity (Fa) approaches the upper limit of the formula (2) with increasing draw ratio, whereas (Sa) approaches the upper limit of the formula (1) and (Fa) approaches the preferred lower limit of the formula (2) with decreasing draw ratio. The draw ratio is preferably 1.0 to 2 times and more preferably 1.0 to 1.5 times. In particular, (Sa) and (Fa) can be easily controlled within the preferred ranges by omitting the drawing treatment of the microfine fiber-forming fiber (a) after spinning. In the production of microfine fiber-forming fibers (b), although depending upon the constituting components, the average elongation at break (Sb) approaches the lower limit of the formula (3) and the average tenacity (Fb) satisfies the formula (4) with increasing draw ratio, whereas (Sb) approaches the upper limit of the formula (3) and (Fb) approaches the preferred lower limit of the formula (4) with decreasing draw ratio. The draw ratio is preferably 2 times or more and more preferably 2.2 times or more. The upper limit of the draw ratio is not particularly restricted as long as the drawing is conducted stably, and is preferably 5 times or less and more preferably 4 times less. The microfine fiber-forming fibers (a) and (b) are preferably spun at a spinning speed of 250 to 600 m/min and a spinning temperature of 250 to 300°C.

Next, the process for producing the leather-like sheet substrate from staples of the microfine fiber-forming fibers (a) and (b) is explained below. The leather-like sheet substrate is produced by known methods, for example, a method of sequentially conducting a step of producing a fiber-entangled nonwoven fabric made of the microfine fiber-forming fibers, a step of impregnating a polymeric elastomer into the fiber-entangled nonwoven fabric and solidifying it, and a step of forming the microfine fiber-forming fibers into microfine fibers. The step of impregnation and solidification of the polymeric elastomer and the step of conversion into the microfine fibers may be reversed in their order.

The staples are carded and then respectively made into a web (I) of the microfine fiber-forming fiber (a) and a web (II) of the microfine fiber-forming fibers (b) by a random-web or cross-lap web treatment. The webs (I) and (II) are entangled into a composite web having a desired mass per unit area. In the leather-like sheet of the present invention, the ratio (A)/(B) of the layer (I) of the microfine fiber (A) formed from the microfine fiber-forming fiber (a) to the layer (II) of the microfine fiber (B) formed from the microfine fiber-forming fiber (b) is 10/90 to 90/10 and preferably 15/85 to 70/30 by mass. The ratio (A)/(B) is more preferably 20/80 to 50/50 by mass, because the appearance and shape stability of the resultant suede-finished leather-like sheet are excellent. Therefore, the webs (I) and (II) are made into the composite web so that the ratio (A)/(B) after converting the microfine fiber-forming fibers (a) and (b) into the microfine fibers (A) and (B) falls within the above range. If the ratio (A)/(B) is less than 10/90, the resultant leather-like sheet fails to show a sufficiently soft feel. If exceeding 90/10, the effect of the microfine fiber (B) to enhance the strength is reduced to fail to obtain a sufficient strength of the leather-like sheet.

The mass per unit area of the composite web of the webs (I) and (II) may be selected according to the intended final use, and is preferably 100 to 3,000 g/m². Alternatively, to make the production more efficient, a plural leather-like sheets each having the intended mass per unit area can be produced at the same time from a fiber-entangled composite nonwoven fabric having a mass per unit area about twice the intended level by slicing it using a band knife along its major surface after the impregnation and solidification of a polymeric elastomer solution. The composite nonwoven fabric to be used in this method includes web (I)/web (II)/web (I) and web (II)/web (I)/web (II). Although not particularly limited, the web (I)/web (II)/web (I) is preferred in the present invention because it is easy to from a dense napped surface on the resultant suede-finished leather-like sheet and a feel closer to that of natural leathers can be attained because of the density gradient in the thickness direction.

Next, the superposed webs are entangled by a known method such as a needle punching method to integrate the webs into a fiber-entangled nonwoven fabric. The needle for the needle-punching to be employed in the present invention may be a known needle, and preferably a 1-barb needle because it is required for the entanglement of webs in their thickness directions to cause little fiber break. A multi-barb needle such as 3-barb needle, 6-barb needle and 9-barb needle may be also used to increase the surface specific gravity of nonwoven fabric. These needles may be used in combination of two or more, if necessary. The punching density of the needle-punching varies depending on the shape of needle and the thickness of superposed webs, and may be usually selected from the range of 200 to 2,500 punches/cm². In general, the conditions for needle-punching the web of microfine fiber-forming fibers can be strengthened by increasing the number of barbs of needle, by increasing the penetration depth of needle or by increasing the needle-punching density. However, if the needle-punching conditions are too strong, the cutting and splitting of the microfine fiber-forming fibers occur to fail to entangle the webs sufficiently. If the needle-punching conditions are too weak, the webs fail to be entangled sufficiently because of the lack of the number of fibers that are oriented in the thickness direction. In addition, it becomes difficult to obtain a beautiful, high-quality suede surface with a high napping density.

Next, the fiber-entangled nonwoven fabric is pressed in a thickness direction to smooth the surface and control the thickness. The pressing may be preformed by known methods, for example, by passing the fiber-entangled nonwoven fabric through a plurality of heating rolls, or by passing the preheated fiber-entangled nonwoven fabric through cooling rolls. By pressing, the sea component of the microfine fiber-forming fibers, i.e., the low-melt viscosity component such as polyethylene, is melted and press-fused to smooth the surface of the fiber-entangled nonwoven fabric. Prior to the pressing, it is preferred to add a substance such as polyvinyl alcohol, starch and resin emulsion which is removable by a solvent or decomposer in the subsequent step, in order to prevent the change of shape due to tension and pressing force and ensure the soft feel of the resultant suede-finished leather-like sheet by controlling the interstices between the microfine fibers and the surrounding polymeric elastomer.

Next, a solution or dispersion of the polymeric elastomer is impregnated into the surface-smoothed fiber-entangled nonwoven fabric, and then solidified into a spongy structure. As the polymeric elastomer, known elastomers that are conventionally used for the production of leather-like sheets are preferably used. Examples thereof include polyurethane resins, polyvinyl chloride resins, polyacrylic acid resins, polyamino acid resins, silicone resins, copolymers constituted mainly from these resins, and mixtures thereof. Of these elastomers, polyurethane resins, copolymers constituted mainly from polyurethane resins and mixtures thereof are particularly preferred because of their ability to provide a feel and touch like natural leathers. The preferred polyurethane resins may include so-called segmented polyurethanes produced by reacting a diisocyanate compound and a low-molecular chain extender with at least one polymer diol (soft segment) having a number-average molecular weight of 500 to 5,000 which is selected from the group consisting of polyester diols obtained by the reaction of a diol with a dicarboxylic acid or its ester-forming derivative, polylactone diols, polycarbonate diols and polyether diols. The diol compound for constituting the soft segment preferably has 6 to 10 carbon atoms in view of durability and feel. Examples thereof include 3-methyl-1,5-pentanediol, 1,6-hexanediol, 2-methyl-1,8-octanediol, 1,9-nonanediol and 1,10-decanediol. Examples of the dicarboxylic acid include aliphatic dicarboxylic acids such as succinic acid, glutaric acid, adipic acid, azelaic acid and sebacic acid; and aromatic dicarboxylic acids such as terephthalic acid and isophthalic acid. The number-average molecular weight of the polymer diol is preferably 500 or more, because the resultant leather-like sheet exhibits an excellent softness and feel like natural leathers. The number-average molecular weight is preferably 5,000 or less, because the urethane group concentration is reduced to provide a polyurethane resin well-balanced in the softness, durability, heat resistance and resistance to hydrolysis. Examples of the diisocyanate compound include diphenylmethane 4,4'-diisocyanate, tolylene diisocyanate, isophorone diisocyanate, hexamethylene diisocyanate and dicyclohexylmethane 4,4'-diisocyanate.

Examples of the low-molecular chain extender include low-molecular compounds having a molecular weight of 300 or less and having two active hydrogen atoms, such as ethylene glycol, propylene glycol, butanediol, hexanediol, N-methyldiethanolamine and ethylenediamine. The polymeric elastomer may be used alone or in combination of two or more, and may be added with a solidification modifier, a stabilizer, a colorant such as carbon black and titanium oxide, etc., if necessary.

The polymeric elastomer is impregnated into the fiber-entangled nonwoven fabric in the form of an aqueous emulsion or a solution in an organic solvent, and then solidified into a spongy structure. Although not particularly restricted, the impregnation is preferably performed by directly impregnating the fiber-entangled nonwoven fabric with the solution of polymeric elastomer and then optionally squeezing the impregnated fabric using a mangle, or by coating the fiber-entangled nonwoven fabric with the solution of polymeric elastomer using a coater to allow the solution to penetrate into the nonwoven fabric, because the feel is well balanced.

To attain a soft feel like natural leathers, the polymeric elastomer is impregnated into the fiber-entangled nonwoven fabric so as to have the ratio of the sum of the microfine fibers (A) and (B) to the polymeric elastomer of preferably 20:80 to 95:5 and more preferably of 25:75 to 90:10 by mass in the final leather-like sheet. If the proportion of the microfine fibers is too small, the feel of the resultant leather-like sheet becomes rubber-like, whereas becomes paper-like if too large.

After impregnating and solidifying the solution or dispersion of the polymeric elastomer, the sea components of the microfine fiber-forming fibers are removed in a known manner by dissolution or decomposition using a substance which is a non-solvent for the microfine fibers and the polymeric elastomer, but a solvent or decomposer for the sea component, thereby converting the microfine fiber-forming fibers into the microfine fibers to obtain a leather-like sheet substrate comprising the microfine fibers and the polymeric elastomer.

As described above, the feel of the leather-like sheet becomes softer as the elongation at break of the microfine fibers increases and the tenacity thereof decreases. However, the use of only microfine fibers having a high elongation at break and a low tenacity tends to reduce the mechanical properties of leather-like sheet. Therefore, the microfine fiber (A) and the microfine fiber (B) constituting the leather-like sheet are required to satisfy the formulae (5) and (6) and the formulae (7) and (8), respectively:

$$130 < SA < 200 \qquad (5)$$

$$FA < 1.5 \qquad (6)$$

$$30 < SB < 90 \qquad (7)$$

$$2.0 < FB \qquad (8)$$

wherein SA is an average elongation at break (%) and FA is an average tenacity (cN/dtex) of the microfine fiber (A), and SB is an average elongation at break (%) and FB is an average tenacity (cN/dtex) of the microfine fiber (B).

If (SA) is 130% or less, the feel of leather-like sheet tends to become hard. If (SA) is 200% or more, the resultant clothing may have a tendency to easily pill during its wear because of a large residual elongation. If (SB) is 30% or less, the feel of leather-like sheet tends to become hard. If (SB) is 90% or more, the reduction in the mechanical properties such as tear strength cannot be prevented. If (FA) is 1.5 cN/dtex or more, the feel of leather-like sheet tends to become hard. If (FB) is 2.0 cN/dtex or less, the reduction in the mechanical properties such as tear strength cannot be prevented. The lower limit of (FA) and the upper limit of (FB) are, but not particularly limited, preferably 0.1 cN/dtex and 5.0 cN/dtex, respectively. The microfine fiber (A) satisfying the formulae (5) and (6) and the microfine fiber (B) satisfying the formulae (7) and (8) are respectively produced by converting the microfine fiber-forming fiber (a) satisfying the formulae (1) and (2) and the microfine fiber-forming fiber (b) satisfying the formulae (3) and (4) into microfine fibers. It is particularly preferred to from these microfine fibers from the microfine fiber-forming fibers having their island component made of polyamides.

Although suitably selected depending on the intended use and not specifically limited, the thickness of the leather-like sheet substrate is preferably 0.3 to 3 mm. If 0.3 mm or more, problems such as elongation during the production process are preferably prevented, and the entanglement of nonwoven fabrics and the impregnation of polymeric elastomer are preferably facilitated if 3.0 mm or less. The specific gravity of the leather-like sheet substrate is also not particularly restricted, and preferably 0.3 to 0.7 g/cm$^3$. If 0.3 g/cm$^3$ or more, the resultant sheet preferably exhibits a sufficient strength. If 0.7 g/cm$^3$ or less, the resultant sheet preferably exhibits a soft feel and a sufficient "light weight feeling" which has been generally recognized as one of the characteristic features of natural leathers, because the specific gravity becomes close to that of natural leathers.

Next, the surface of the layer (I) of the leather-like sheet substrate is napped to form raised fibers mainly made of the microfine fiber (A). Although not particularly restricted, it is preferred to abrade the surface with an abrasive such as sandpaper to raise fibers present up to a desired depth so as to form a napped surface with a uniform raised fiber density, and make the raised fibers to have a desired uniform length throughout the entire napped surface by carding, because a high-quality surface feel like natural leathers is obtained. Since the touch and the appearance such as gloss are considerably influenced by the length of raised fibers, the napping and carding conditions such as roughness of sandpaper, abrasion speed and abrasion pressure are appropriately controlled so as to form raised fibers with a desired length.

After napping the surface of the leather-like sheet substrate as described above, the suede-finished leather-like sheet of the present invention is obtained, if necessary, after dyeing. The suede-finished leather-like sheet thus obtained is suitably used as the material for clothing, sports gloves and working gloves which require a high mechanical strength, and gloves for popular use such as fashion gloves which require a high-quality appearance and soft feel. Thus, the use of the suede-finished leather-like sheet enables the production of gloves with a very high commercial value which are usable in various applications.

The present invention will be described in more detail with reference to the following examples. However, it should be noted that the following examples are only illustrative and not intended to limit the scope of the invention thereto. The "part" and "ratio" described below are based on mass, unless otherwise specified. In the following examples, the evaluations were made on golf gloves that were severely required to have a high wear resistance. Therefore, the color was limited to black color which was one of the favored colors. However, the color of the suede-finished leather-like sheet of the present invention is not intended to be limited thereto.

The properties were measured by the following methods.

(i) Fineness of Microfine Fiber-Forming Fiber
Expressed by a mass per 10,000 m fiber obtained by dividing the extruder output by the number of holes of spinneret and a spinning speed.

(ii) Fineness of Microfine Fiber
Calculated from the average cross-sectional area of 50 microfine fibers optionally selected from a cross-sectional electron microphotograph of leather-like sheet.

(iii) Average Elongation at Break and Average Tenacity of Microfine Fiber-Forming Fiber
Expressed by the average values of results on optionally selected 10 microfine fiber-forming fibers measured according to JIS L1096.

(iv) Average Elongation at Break and Average Tenacity of Microfine Fiber
Optionally selected staples of the microfine fiber-forming fiber were immersed in toluene or perclene heated to 90 to 95°C and then squeezed. This operation was repeated several times to remove the sea component by extraction. The elongation at break and tenacity were measured on ten microfine fiber bundles according to JIS L1015 and expressed by the average values.

(v) Thickness
Measured under a load of 240 g/cm$^2$ according to JIS L1096.

(vi) Tear Strength (kg)
Evaluated according to JIS L1096.

(vii) Pilling
Evaluated according to JIS L1076.

(viii) Appearance, Touch and Feel of Suede-Finished Leather-Like Sheet
Evaluated by persons engaging in the production or sale of artificial leathers while taking touch, gloss, etc. into consideration. The evaluation results of feel were expressed by A for good, B for moderate, and C for poor.

(ix) Wearing Comfort, Appearance and Shape of Golf Gloves
Evaluated by persons engaging in the production or sale of artificial leathers while taking touch, gloss, etc. into consideration. Further, a trial hitting of 1,000 balls using a golf club with a rubber grip was performed by 10 monitors wearing the glove. The results of evaluation on the wearing comfort and the appearance and shape after the trial hitting were expressed by A for good, B for moderate, and C for poor.

FIBER PRODUCTION EXAMPLE 1

Microfine Fiber-Forming Fiber (a) and Microfine Fiber (A)

Chips of 6-nylon (island component) and chips of a highly flowable low-density polyethylene (sea component) were melt-mixed in an extruder, and extruded from a spinneret at a spinning speed of 350 m/min to spin a sea/island type microfine fiber-forming fiber having a fineness of 10 dtex (island component/sea component: 50/50). During the spinning, 7 parts by mass of carbon black was added per 100 parts by mass of 6-nylon. The sea/island type microfine fiber-forming fiber was mechanically crimped without drawing, and cut into staple 1 of 51 mm long. The physical properties of the staple 1 are shown in Table 1. The physical properties of microfine fibers obtained by removing the sea component of the staple 1 by extraction are also shown in Table 1.

FIBER PRODUCTION EXAMPLE 2

Microfine Fiber-Forming Fiber (b) and Microfine Fiber (B)

Chips of 6-nylon (island component) and chips of a highly flowable low-density polyethylene (sea component) were melt-mixed in an extruder, and extruded from a spinneret at a spinning speed of 280 m/min to spin a sea/island type microfine fiber-forming fiber having a fineness of 10 dtex (island component/sea component: 50/50). During the spinning, 4.5 parts by mass of carbon black was added per 100 parts by mass of 6-nylon. The sea/island type microfine fiber-forming fiber was drawn by 2.8 times, mechanically crimped, and cut into staple 2 of 51 mm long. The physical properties of the staple 2 are shown in Table 1. The physical properties of microfine fibers obtained by removing the sea component of the staple 2 by extraction are also shown in Table 1.

FIBER PRODUCTION EXAMPLE 3

Microfine Fiber-Forming Fiber (b) and Microfine Fiber (B)

Chips of 6-nylon (island component) and chips of a highly flowable low-density polyethylene (sea component) were separately melted. The two molten polymer flows were combined in a spinning head and made into a mixed flow by repeatedly dividing and combining (statically mixing) the polymer flow in a spinneret. The mixed flow was spun at a spinning speed of 200 m/min into a sea/island type microfine fiber-forming fiber having a fineness of 10 dtex (island component/sea component: 50/50). During the spinning, 3.5 parts by mass of carbon black was added per 100 parts by mass of 6-nylon. The sea/island type microfine fiber-forming fiber was drawn by 2.8 times, mechanically crimped, and cut into staple 3 of 51 mm long. The physical properties of the staple 3 are shown in Table 1. The physical properties of microfine fibers obtained by removing the sea component of the staple 3 by extraction are also shown in Table 1.

FIBER PRODUCTION EXAMPLE 4

Chips of 6-nylon (island component) and chips of a highly flowable low-density polyethylene (sea component) were melt-mixed in an extruder, and extruded from a spinneret at a spinning speed of 350 m/min to spin a sea/island type microfine fiber-forming fiber having a fineness of 10 dtex (island component/sea component: 50/50). During the spinning, 7 parts by mass of carbon black was added per 100 parts by mass of 6-nylon. The sea/island type microfine fiber-forming fiber was drawn by 2.8 times, mechanically crimped, and cut into staple 4 of 51 mm long. The physical properties of the staple 4 are shown in Table 1. The physical properties of microfine fibers obtained by removing the sea component of the staple 4 by extraction are also shown in Table 1.

FIBER PRODUCTION EXAMPLE 5

Chips of 6-Nylon (island component) having a melt viscosity lower than that of the 6-nylon chips used in Fiber Production Example 1 at the spinning temperature and chips of a highly flowable low-density polyethylene (sea component) were melt-mixed in an extruder, and extruded from a spinneret at a spinning speed of 230 m/min to spin a sea/island type microfine fiber-forming fiber having a fineness of 10 dtex (island component/sea component: 50/50). During the spinning, 4.5 parts by mass of carbon black was added per 100 parts by mass of 6-nylon. The sea/island type microfine fiber-forming fiber was drawn by 2.8 times, mechanically crimped, and cut into staple 5 of 51 mm long. The physical properties of the staple 5 are shown in Table 1. The physical properties of microfine fibers obtained by removing the sea component of the staple 5 by extraction are also shown in Table 1.

Table 1

| | Fiber Production Examples | | | | |
|---|---|---|---|---|---|
| | 1 | 2 | 3 | 4 | 5 |
| Microfine fiber-forming fiber | | | | | |
| Staples No. | 1 | 2 | 3 | 4 | 5 |
| Average fineness (dtex) | 9.4 | 5.5 | 6.3 | 5.6 | 5.9 |
| Average elongation at break (%) | 160 | 50 | 53 | 81 | 56 |
| Average tenacity (cN/dtex) | $6.5 \times 10^{-1}$ | $1.8 \times 10^{0}$ | $2.0 \times 10^{0}$ | $1.5 \times 10^{0}$ | $1.6 \times 10^{0}$ |
| Microfine fiber | | | | | |
| Average fineness (dtex) | $1.6 \times 10^{-2}$ | $9.1 \times 10^{-3}$ | $1.6 \times 10^{-2}$ | $9.4 \times 10^{-3}$ | $7.3 \times 10^{-4}$ |
| Average elongation at break (%) | 151 | 69 | 51 | 65 | 51 |
| Average tenacity (cN/dtex) | $8.4 \times 10^{-1}$ | $2.6 \times 10^{0}$ | $3.3 \times 10^{0}$ | $3.0 \times 10^{0}$ | $3.2 \times 10^{0}$ |

EXAMPLE 1

After separately carded, the staples 1 and 2 were respectively formed into a web (I) made of the staple 1 and a web (II) made of the staple 2 using a webber. Superposed webs (web (I)/web (II)/web (I)) in a ratio of 1/4/1 by mass were needle-punched at a density of 700 punches/$cm^2$ using a needle-punching machine equipped with a one-barb needle, thereby obtaining a fiber-entangled nonwoven fabric. After a dimethylformamide solution of polyester polyether copolymer-based polyurethane was impregnated into the fiber-entangled nonwoven fabric and wet-solidified, the sea component was removed by extraction in 80°C toluene to form microfine fibers. The resultant sheet was sliced along the major surface into two parts to obtain leather-like sheet substrates. The mass per unit area was 350 g/$m^2$, the thickness was 0.95 mm, and the ratio of polyurethane resin to microfine fibers was 40/60. After adjusting the thickness to 0.8 mm by abrading the sliced surface of the leather-like sheet substrate with a sandpaper, the opposite surface was napped to obtain a napped leather-like sheet. The napped leather-like sheet was a composite comprising a layer (I) mainly made of the microfine fiber derived from the staple 1 and a layer (II) mainly made of the microfine fiber derived from the staple 2 in a ratio of 1/2 by mass.

Then, the napped leather-like sheet was dyed with a black metal complex salt-containing dye (Irgaran Black GL) using a Wince dyeing machine at 90°C for one hour in an amount of 3% owf, thereby obtaining a suede-finished leather-like sheet. The suede-finished leather-like sheet thus obtained showed a natural and balanced color tone because of a sufficient blackness of the napped surface and a deeper color of the surface as compared with the back surface. Also, the suede-finished leather-like sheet showed a high-quality appearance due to fine writing effect, an excellent touch and a dense feel together. The golf glove made of the suede-finished leather-like sheet was excellent in both the appearance and wearing comfort. As a result of 1,000-hitting trial by 10 monitors putting on the golf gloves, it was confirmed that the golf gloves were extremely high in their commercial value, because their shapes were not lost during the wear, the pilling resistance was excellent and their good appearance was maintained even after the hitting trial. The results of evaluation of the suede-finished leather-like sheet are shown in Table 2.

COMPARATIVE EXAMPLE 1

In the same manner as in Example 1 except for preparing a fiber-entangled nonwoven fabric by needle-punching a web made of only the staple 4 at a density of 700 punches/$cm^2$, a suede-finished leather-like sheet was obtained. The suede-finished leather-like sheet showed a high-quality appearance due to fine writing effect, but was insufficient in the blackness of the napped surface and hard in the feel. The golf glove made thereof had a good appearance with fine writing effect, but was hard in wearing feel. As a result of 1,000-hitting trial by 10 monitors, it was confirmed that the golf gloves were not so high in their commercial value, because their shape was slightly lost and the pilling occurred at the portion brought into contact with a grip of golf club, although showed substantially no change in appearance. The results of evaluation of the suede-finished leather-like sheet are shown in Table 2.

COMPARATIVE EXAMPLE 2

In the same manner as in Example 1 except for preparing a fiber-entangled nonwoven fabric by needle-punching a web made of only the staple 1 at a density of 700 punches/$cm^2$, a suede-finished leather-like sheet was obtained. The suede-finished leather-like sheet had a napped surface of sufficient blackness, a high-quality appearance due to fine writing effect, an excellent touch and a dense feel. The golf glove made thereof was satisfactory in both the appearance and wearing comfort. However, after 1,000-hitting trial by 10 monitors, the shape of golf glove was lost during the wear to show a poor appearance. Since the pilling occurred after about 700th hitting, the golf glove was poor in commercial value. The results of evaluation of the suede-finished leather-like sheet are shown in Table 2.

COMPARATIVE EXAMPLE 3

In the same manner as in Example 1 except for using the staple 3 in place of the staple 1, a suede-finished leather-like sheet was obtained. The suede-finished leather-like sheet showed a high-quality appearance due to fine writing effect and had a napped surface of sufficient blackness, but was hard in the feel. The golf glove made thereof exhibited a good appearance, but was hard in the wearing feel. After 1,000-hitting trial by 10 monitors, the shape of golf glove was not lost during the wear. However, the pilling occurred after about 700th hitting to make the appearance poor. Thus, the golf glove was poor in commercial value. The results of evaluation of the suede-finished leather-like sheet are shown in Table 2.

COMPARATIVE EXAMPLE 4

In the same manner as in Example 1 except for using the staple 5 in place of the staple 1, a suede-finished leather-like sheet was obtained. The suede-finished leather-like sheet showed a high-quality appearance due to fine writing effect, but was insufficient in the blackness of the napped surface and hard in the feel. After 1,000-hitting trial by 10 monitors, the shape of golf glove was not lost during the wear and the change in appearance was hardly observed after the trial, but the pilling occurred on the surface. Thus, the golf glove was not so high in its commercial value. The results of evaluation of the suede-finished leather-like sheet are shown in Table 2.

COMPARATIVE EXAMPLE 5

A lined suede-finished leather-like sheet was prepared by lining the back surface of the suede-finished leather-like sheet obtained in Comparative Example 2 with an extremely thin knit having a mass per unit area of 100 g/m$^2$. The lined suede-finished leather-like sheet had, as in the case of Comparative Example 2, a napped surface of sufficient blackness and a high-quality appearance due to fine writing effect, but was hard in the feel and lacking in uniformity. The golf glove made thereof had a good appearance, but was poor in the wearing feel. After 1,000-hitting trial by 10 monitors, the shape of golf glove was not lost during the wear and the change in appearance was hardly observed after the trial, but the pilling occurred slightly on the surface. Thus, the golf glove was poor in its commercial value. The results of evaluation of the suede-finished leather-like sheet are shown in Table 2.

Table 2

| | Example | Comparative Examples | | | | |
|---|---|---|---|---|---|---|
| | 1 | 1 | 2 | 3 | 4 | 5 |
| Microfine fiber-forming fiber | | | | | | |
| Staples No. (layer I/layer II) | 1/2 | 4 | 1 | 3/2 | 5/2 | 5/2 |
| Tear strength (kg) | 3.6 | 3.6 | 2.2 | 4.8 | 5.8 | 8.9 |
| Pilling | Rank 4 | Rank 3 | Rank 3 | Rank 2 | Rank 3 | Rank 3 |
| Feel | A | B | A | B | B | C |
| Wearing comfort of gloves | A | B | A | B | B | C |
| Hitting trial | | | | | | |
| Appearance | A | B | C | C | B | B |
| Shape | A | B | C | A | A | A |

The suede-finished leather-like sheet of the present invention exhibits a soft feel like natural leathers, a high-quality appearance such as fine writing effect and good physical properties capable of withstanding severe wearing conditions at the same time. Therefore, the suede-finished leather-like sheet is suitably used in applications of clothing and gloves such as sports gloves, working gloves and general gloves, especially golf gloves.

**Claims**

1.  A suede-finished leather-like sheet which comprises a fiber-entangled nonwoven fabric comprising a layer (I) made of a microfine fiber (A) having an average fineness of 0.5 dtex or less and a layer (II) made of a microfine fiber (B) having an average fineness equal to or less than that of the microfine fiber (A), and a polymeric elastomer impregnated in the fiber-entangled nonwoven fabric,
    the layers (I) and (II) being superposed one on the other and entangled into an integral composite such that a ratio of the microfine fiber (A) to the microfine fiber (B) is 10/90 to 90/10 by mass;
    the surface of the layer (I) being a napped surface made mainly of a raised microfine fiber (A);
    the microfine fiber (A) being formed by converting a microfine fiber-forming fiber (a) into microfine fibers, said microfine fiber-forming fibers (a) satisfying the formulae (1) and (2):

$$130 < Sa < 200 \qquad (1)$$

$$Fa < 0.8 \qquad (2)$$

    wherein Sa is an average elongation at break (%) and Fa is an average tenacity (cN/dtex) of the microfine fiber-forming fiber (a); and
    the microfine fiber (B) being formed by converting a microfine fiber-forming fiber (b) into microfine fibers, said microfine fiber-forming fiber (b) satisfying the formulae (3) and (4):

$$30 < Sb < 90 \qquad (3)$$

$$1.5 < Fb \qquad (4)$$

    wherein Sb is an average elongation at break (%) and Fb is an average tenacity (cN/dtex) of the microfine fiber-forming fiber (b).

2.  The suede-finished leather-like sheet according to claim 1, wherein the microfine fiber (A) satisfies the formulae (5) and (6):

$$130 < SA < 200 \qquad (5)$$

$$FA < 1.5 \qquad (6)$$

    wherein SA is an average elongation at break (%) and FA is an average tenacity (cN/dtex) of the microfine fiber (A), and the microfine fiber (B) satisfies the formulae (7) and (8):

$$30 < SB < 90 \qquad (7)$$

$$2.0 < FB \qquad (8)$$

    wherein SB is an average elongation at break (%) and FB is an average tenacity (cN/dtex) of the microfine fiber (B).

3. The suede-finished leather-like sheet according to claim 1 or 2, wherein each of the microfine fiber (A) and the microfine fiber (B) is made of at least one polymer selected from the group consisting of polyamides, copolymers mainly based on polyamide, aromatic or aliphatic polyesters, copolymers mainly based on polyester, and acrylic polymers.

4. The suede-finished leather-like sheet according to claim 1 or 2, wherein each of the microfine fiber (A) and the microfine fiber (B) is made of at least one polyamide.

5. A suede-finished leather-like sheet which comprises a fiber-entangled nonwoven fabric comprising a layer (I) made of a microfine fiber (A) having an average fineness of 0.5 dtex or less and a layer (II) made of a microfine fiber (B) having an average fineness equal to or less than that of the microfine fiber (A), and a polymeric elastomer impregnated in the fiber-entangled nonwoven fabric,
the layers (I) and (II) being superposed one on the other and entangled into an integral composite such that a ratio of the microfine fiber (A) to the microfine fiber (B) is 10/90 to 90/10 by mass;
the surface of the layer (I) being a napped surface made mainly of a raised microfine fiber (A);
the microfine fiber (A) satisfying the formulae (5) and (6):

$$130 < SA < 200 \qquad (5)$$

$$FA < 1.5 \qquad (6)$$

wherein SA is an average elongation at break (%) and FA is an average tenacity (cN/dtex) of the microfine fiber (A); and the microfine fiber (B) satisfying the formulae (7) and (8):

$$30 < SB < 90 \qquad (7)$$

$$2.0 < FB \qquad (8)$$

wherein SB is an average elongation at break (%) and FB is an average tenacity (cN/dtex) of the microfine fiber (B).

6. The suede-finished leather-like sheet according to claim 5, wherein each of the microfine fiber (A) and the microfine fiber (B) is made of at least one polymer selected from the group consisting of polyamides, copolymers mainly based on polyamide, aromatic or aliphatic polyesters, copolymers mainly based on polyester, and acrylic polymers.

7. The suede-finished leather-like sheet according to claim 5, wherein each of the microfine fiber (A) and the microfine fiber (B) is made of at least one polyamide.

8. A process for producing a suede-finished leather-like sheet, comprising the steps of:

(i) producing a web (I) made of staple of a microfine fiber-forming fiber (a) satisfying the formulae (1) and (2):

$$130 < Sa < 200 \qquad (1)$$

$$Fa < 0.8 \qquad (2)$$

wherein Sa is an average elongation at break (%) and Fa is an average tenecity (cN/dtex) of the microfine fiber-forming fiber (a);

(ii) producing a web (II) made of staple of a microfine fiber-forming fiber (b) satisfying the formulae (3) and (4):

$$30 < Sb < 90 \qquad (3)$$

$$1.5 < Fb \qquad (4)$$

wherein Sb is an average elongation at break (%) and Fb is an average tenacity (cN/dtex) of the microfine fiber-forming fiber (b);

(iii) entangling the webs (I) and (II) to form a fiber-entangled nonwoven fabric;

(iv) impregnating a solution or dispersion of a polymeric elastomer into the fiber-entangled nonwoven fabric and solidifying the impregnated polymeric elastomer;

(v) forming a leather-like sheet substrate by converting the microfine fiber-forming fiber (a) into a microfine fiber (A) having an average fineness of 0.5 dtex or less, and converting the microfine fiber-forming fiber (b) into a microfine fiber (B) having an average fineness equal to or less than that of the microfine fiber (A);

(vi) napping a surface of the web (I) of the leather-like sheet substrate to form a raised fiber made mainly of the microfine fiber (A) on the surface; and

(vii) dyeing the napped leather-like sheet substrate to form the suede-finished leather-like sheet.

9. A glove at least a part of which is produced from the suede-finished leather-like sheet as claimed in any one of claims 1 to 7.

**Patentansprüche**

1. Velourisiertes lederartiges Bahnenmaterial, umfassend einen Vliesstoff mit verwickelten Fasern, umfassend eine Schicht (I), hergestellt aus einer mikrofeinen Faser (A) mit einer durchschnittlichen Feinheit von 0,5 dtex oder weniger und eine Schicht (II), hergestellt aus einer mikrofeinen Faser (B) mit einer durchschnittlichen Feinheit gleich oder weniger der der mikrofeinen Faser (A), und ein polymeres Elastomer, das in den Vliesstoff mit verwickelten Fasern imprägniert ist,

wobei die Schichten (I) und (II) überlagert werden und zu einem integralen Verbundstoff verstrickt werden, so dass das Verhältnis der mikrofeinen Faser (A) zur mikrofeinen Faser (B) 10/90 bis 90/10, bezogen auf das Gewicht, beträgt;

wobei die Oberfläche der Schicht (I) eine geraute Oberfläche ist, die hauptsächlich aus einer erhobenen mikrofeinen Faser (A) hergestellt ist;

wobei die mikrofeine Faser (A) gebildet wird durch Umwandeln einer mikrofeine Fasern bildenden Faser (a) in mikrofeine Fasern, wobei die mikrofeine Fasern bildenden Fasern (a) den Formeln (1) und (2) genügen:

$$130 < Sa < 200 \qquad (1)$$

$$Fa < 0{,}8 \qquad (2)$$

wobei Sa eine durchschnittliche Bruchdehnung (%) und Fa eine durchschnittliche Reißfestigkeit (cN/dtex) der mikrofeine Fasern bildenden Faser (a) ist; und

wobei die mikrofeine Faser (B) gebildet wird durch Umwandeln einer mikrofeine Fasern bildenden Faser (b) in mikrofeine Fasern, wobei die mikrofeine Fasern bildende Faser (b) den Formeln (3) und (4) genügt:

$$30 < Sb < 90 \qquad (3)$$

$$1,5 < Fb \qquad (4)$$

wobei Sb eine durchschnittliche Bruchdehnung (%) und Fb eine durchschnittliche Reißfestigkeit (cN/dtex) der mikrofeinen Faser bildenden Faser (b) ist.

2. Velourisiertes lederartiges Bahnenmaterial nach Anspruch 1, wobei die mikrofeine Faser (A) den Formeln (5) und (6) genügt:

$$130 < SA < 200 \qquad (5)$$

$$FA < 1,5 \qquad (6)$$

wobei SA eine durchschnittliche Bruchdehnung (%) und FA eine durchschnittliche Reißfestigkeit (cN/dtex) der mikrofeinen Faser (A) ist, und
die mikrofeine Faser (B) den Formeln (7) und (8) genügt:

$$30 < SB < 90 \qquad (7)$$

$$2,0 < FB \qquad (8)$$

wobei SB eine durchschnittliche Bruchdehnung (%) und FB eine durchschnittliche Reißfestigkeit (cN/dtex) der mikrofeinen Faser (B) ist.

3. Velourisiertes lederartiges Bahnenmaterial nach Anspruch 1 oder 2, wobei jede der mikrofeinen Faser (A) und der mikrofeinen Faser (B) aus mindestens einem Polymer, ausgewählt aus Polyamiden, hauptsächlich auf Polyamid basierenden Copolymeren, aromatischen oder aliphatischen Polyestern, hauptsächlich auf Polyester basierenden Copolymeren und Acrylpolymeren, hergestellt ist.

4. Velourisiertes lederartiges Bahnenmaterial nach Anspruch 1 oder 2, wobei jede der mikrofeinen Faser (A) und der mikrofeinen Faser (B) aus mindestens einem Polyamid hergestellt ist.

5. Velourisiertes lederartiges Bahnenmaterial, umfassend einen Vliesstoff mit verwickelten Fasern, umfassend eine Schicht (I), hergestellt aus einer mikrofeinen Faser (A) mit einer durchschnittlichen Feinheit von 0,5 dtex oder weniger und eine Schicht (II), hergestellt aus einer mikrofeinen Faser (B) mit einer durchschnittlichen Feinheit gleich oder weniger der der mikrofeinen Faser (A), und ein polymeres Elastomer, das in den Vliesstoff mit verwickelten Fasern imprägniert ist,
wobei die Schichten (I) und (II) überlagert werden und zu einem integralen Verbundstoff verstrickt werden, so dass das Verhältnis der mikrofeinen Faser (A) zur mikrofeinen Faser (B) 10/90 bis 90/10, bezogen auf das Gewicht, beträgt;
wobei die Oberfläche der Schicht (I) eine geraute Oberfläche ist, die hauptsächlich aus einer erhobenen mikrofeinen Faser (A) hergestellt ist;
wobei die mikrofeine Faser (A) den Formeln (5) und (6) genügt:

$$130 < SA < 200 \qquad (5)$$

$$FA < 1,5 \qquad (6)$$

wobei SA eine durchschnittliche Bruchdehnung (%) und FA eine durchschnittliche Reißfestigkeit (cN/dtex) der mikrofeinen Faser (A) ist; und

die mikrofeine Faser (B) den Formeln (7) und (8) genügt:

$$30 < SB < 90 \qquad (7)$$

$$2,0 < FB \qquad (8)$$

wobei SB eine durchschnittliche Bruchdehnung (%) und FB eine durchschnittliche Reißfestigkeit (cN/dtex) der mikrofeinen Faser (B) ist.

6. Velourisiertes lederartiges Bahnenmaterial nach Anspruch 5, wobei jede der mikrofeinen Faser (A) und der mikrofeinen Faser (B) aus mindestens einem Polymer, ausgewählt aus Polyamiden, hauptsächlich auf Polyamid basierenden Copolymeren, aromatischen oder aliphatischen Polyestern, hauptsächlich auf Polyester basierenden Copolymeren und Acrylpolymeren, hergestellt ist.

7. Velourisiertes lederartiges Bahnenmaterial nach Anspruch 5, wobei jede der mikrofeinen Faser (A) und der mikrofeinen Faser (B) aus mindestens einem Polyamid hergestellt ist.

8. Verfahren zur Herstellung eines velourisierten lederartigen Bahnenmaterials, umfassend die Schritte:

(i) Herstellen einer Bahn (I), hergestellt aus einem Stapel aus einer mikrofeine Fasern bildenden Faser (a), die den Formeln (1) und (2) genügt:

$$130 < Sa < 200 \qquad (1)$$

$$Fa < 0,8 \qquad (2)$$

wobei Sa eine durchschnittliche Bruchdehnung (%) und Fa eine durchschnittliche Reißfestigkeit (cN/dtex) der mikrofeine Fasern bildenden Faser (a) ist;

(ii) Herstellen einer Bahn (II), hergestellt aus einem Stapel aus einer mikrofeine Fasern bildenden Faser (b), die den Formeln (3) und (4) genügt:

$$30 < Sb < 90 \qquad (3)$$

$$1,5 < Fb \qquad (4)$$

wobei Sb eine durchschnittliche Bruchdehnung (%) und Fb eine durchschnittliche Reißfestigkeit (cN/dtex) der mikrofeinen Faser bildenden Faser (b) ist;

(iii) Verstricken der Bahnen (I) und (II), um einen Vliesstoff mit verwickelten Fasern zu bilden;

(iv) Imprägnieren einer Lösung oder Dispersion von polymerem Elastomer in den Vliesstoff mit verwickelten Fasern und Verfestigen des imprägnierten polymeren Elastomers;

(v) Bilden eines lederartigen Bahnensubstrats durch Umwandeln der mikrofeine Fasern bildenden Faser (a) in eine mikrofeine Faser (A) mit einer durchschnittlichen Feinheit von 0,5 dtex oder weniger, und Umwandeln der mikrofeine Fasern bildenden Faser (b) in eine mikrofeine Faser (B) mit einer durchschnittlichen Feinheit, die gleich oder weniger der der mikrofeinen Faser (A) ist;

(vi) Rauen der Oberfläche der Bahn (I) des lederartigen Bahnensubstrats, um eine erhobene Faser zu bilden, die hauptsächlich hergestellt ist aus der mikrofeinen Faser (A) auf der Oberfläche; und
(vii) Färben des gerauten lederartigen Bahnensubstrats, um das velourisierte lederartige Bahnenmaterial zu bilden.

**9.** Handschuh, von dem mindestens ein Teil hergestellt ist aus dem velourisierten lederartigen Bahnenmaterial wie in einem der Ansprüche 1 bis 7 beansprucht.

**Revendications**

**1.** Feuille de cuir synthétique suédé, qui comporte une étoffe non tissée à fibres enchevêtrées comportant une couche (I) formée d'une fibre microfine (A) ayant une finesse moyenne de 0,5 dtex ou moins et une couche (II) formée d'une fibre microfine (B) ayant une finesse moyenne égale ou inférieure à celle de la fibre microfine (A), et un polymère élastomère imprégné dans l'étoffe non tissée à fibres enchevêtrées,

les couches (I) et (II) étant superposées l'une sur l'autre et enchevêtrées en un composite intégré tel qu'un rapport de la fibre microfine (A) sur la fibre microfine (B) est de 10/90 à 90/10 en masse ;

la surface de la couche (I) étant une surface grattée faite principalement d'une fibre microfine (A) brossée ;

la fibre microfine (A) étant formée en convertissant une fibre (a) formant la fibre microfine en fibres microfines, lesdites fibres (a) formant la fibre microfine satisfaisant aux formules (1) et (2) :

$$130 < Sa < 200 \qquad (1)$$

$$Fa < 0,8 \qquad (2)$$

où Sa est un allongement moyen à la rupture (%) et Fa est une ténacité moyenne (cN/dtex) de la fibre (a) formant la fibre microfine ; et

la fibre microfine (B) étant formée en convertissant une fibre (b) formant la fibre microfine en fibres microfines, ladite fibre (b) formant la fibre microfine satisfaisant aux formules (3) et (4) :

$$30 < Sb < 90 \qquad (3)$$

$$1,5 < Fb \qquad (4)$$

où Sb est un allongement moyen à la rupture (%) et Fb est une ténacité moyenne (cN/dtex) de la fibre (b) formant la fibre microfine.

**2.** Feuille de cuir synthétique suédé selon la revendication 1, dans laquelle la fibre microfine (A) satisfait aux formules (5) et (6) :

$$130 < SA < 200 \qquad (5)$$

$$FA < 1,5 \qquad (6)$$

où SA est un allongement moyen à la rupture (%) et FA est une ténacité moyenne (cN/dtex) de la fibre microfine (A), et la fibre microfine (B) satisfait aux formules (7) et (8) :

EP 1 445 372 B1

$$30 < SB < 90 \qquad (7)$$

$$2,0 < FB \qquad (8)$$

où SB est un allongement moyen à la rupture (%) et FB est une ténacité moyenne (cN/dtex) de la fibre microfine (B).

3. Feuille de cuir synthétique suédé selon la revendication 1 ou 2, dans laquelle chacune de la fibre microfine (A) et de la fibre microfine (B) est faite d'au moins un polymère choisi dans le groupe consistant en les polyamides, les copolymères principalement à base de polyamide, les polyesters aromatiques ou aliphatiques, les copolymères principalement à base de polyester, et les polymères acryliques.

4. Feuille de cuir synthétique suédé selon la revendication 1 ou 2, dans laquelle chacune de la fibre microfine (A) et de la fibre microfine (B) est faite d'au moins un polyamide.

5. Feuille de cuir synthétique suédé qui comporte une étoffe non tissée à fibres enchevêtrées comportant une couche (I) formée d'une fibre microfine (A) ayant une finesse moyenne de 0,5 dtex ou moins et d'une couche (II) formée d'une fibre microfine (B) ayant une finesse moyenne égale ou inférieure à celle de la fibre microfine (A), et d'un polymère élastomère imprégné dans l'étoffe non tissée à fibres enchevêtrées,
les couches (I) et (II) étant superposées l'une sur l'autre et enchevêtrées en un composite intégral tel qu'un rapport de la fibre microfine (A) sur la fibre microfine (B) est de 10/90 à 90/10 en masse ;
la surface de la couche (I) étant une surface grattée faite principalement d'une fibre microfine (A) brossée ;
la fibre microfine (A) satisfaisant aux formules (5) et (6) :

$$130 < SA < 200 \qquad (5)$$

$$FA < 1,5 \qquad (6)$$

où SA est un allongement moyen à la rupture (%) et FA est une ténacité moyenne (cN/dtex) de la fibre microfine (A) ; et la fibre microfine (B) satisfaisant aux formules (7) et (8) :

$$30 < SB < 90 \qquad (7)$$

$$2,0 < FB \qquad (8)$$

où SB est un allongement moyen à la rupture (%) et FB est une ténacité moyenne (cN/dtex) de la fibre microfine (B)

6. Feuille de cuir synthétique suédé selon la revendication 5, dans laquelle chacune de la fibre microfine (A) et de la fibre microfine (B) est faite d'au moins un polymère choisi dans le groupe consistant en les polyamides, les copolymères principalement à base de polyamide, les polyesters aromatiques ou aliphatiques, les copolymères principalement à base de polyester, et les polymères acryliques.

7. Feuille de cuir synthétique suédé selon la revendication 5, dans laquelle chacune de la fibre microfine (A) et de la fibre microfine (B) est faite d'au moins un polyamide.

8. Procédé pour la production d'une feuille de cuir synthétique suédé, comportant les étapes de :

(i) production d'une toile (I) faite d'une fibre courte de fibre (a) formant la fibre microfine satisfaisant aux formules (1) et (2) :

**19**

$$130 < Sa < 200 \qquad (1)$$

$$Fa < 0,8 \qquad (2)$$

où Sa est un allongement moyen à la rupture (%) et Fa est une ténacité moyenne (cN/dtex) de la fibre (a) formant la fibre microfine ;

**(ii)** production d'une toile (II) faite d'une fibre courte de fibre (b) formant la fibre microfine satisfaisant aux formules (3) et (4) :

$$30 < Sb < 90 \qquad (3)$$

$$1,5 \; < Fb \qquad (4)$$

où Sb est un allongement moyen à la rupture (%) et Fb est une ténacité moyenne (cN/dtex) de la fibre (b) formant la fibre microfine;

**(iii)** enchevêtrement des toiles (I) et (II) pour former une étoffe non tissée à fibres enchevêtrées ;

**(iv)** imprégnation d'une solution ou dispersion d'un polymère élastomère dans l'étoffe non tissée à fibres enchevêtrées et solidification du polymère élastomère imprégné ;

**(v)** formation d'un substrat de feuille de cuir synthétique en convertissant la fibre (a) formant la fibre microfine en une fibre microfine (A) ayant une finesse moyenne de 0.5 dtex ou moins, et en convertissant la fibre (b) formant la fibre microfine en une fibre microfine (B) ayant une finesse moyenne égale ou inférieure à celle de la fibre microfine (A) ;

**(vi)** grattage d'une surface de la toile (I) du substrat de feuille de cuir synthétique pour former une fibre brossée faite principalement de la fibre microfine (A) sur la surface ; et

**(vii)** teinture du substrat de feuille de cuir synthétique gratté pour former la feuille de cuir synthétique suédé.

9. Gant dont au moins une partie est produite à partir de la feuille de cuir synthétique suédé selon l'une quelconque des revendications 1 à 7.